# EUROPEAN PATENT SPECIFICATION

(11) **EP 1 677 614 B1**
(45) Date of publication and mention of the grant of the patent: **25.08.2010**
(21) Application number: 04817281.1
(22) Date of filing: 25.10.2004
(51) Int. Cl.: A23G 9/28

(54) **PISTON DEVICE FOR DISPENSING ICE CREAM, FOR ICE CREAM MACHINES OF THE INSTANT TYPE**
KOLBENVORRICHTUNG ZUR ABGABE VON SPEISEEIS FÜR EXPRESS-SPEISEEISMASCHINEN
DISPOSITIF A PISTONS DISTRIBUTEUR DE CREME GLACEE POUR MACHINES A CREMES GLACEES DE TYPE INSTANTANE

(30) Priority: 29.10.2003 IT GE20030085
(43) Date of publication of application: 12.07.2006
(73) Proprietor: ALI S.p.A. - Carpigiani Group, 40011 Anzola Emilia (IT)
(72) Inventor: COCCHI, Gino, I-40100 BOLOGNA (IT); ZANIBONI, Gianni, I-40044 BORGONUOVO DI SASSO MARCONI (IT)
(74) Representative: Ghioni, Carlo Raoul Maria
(86) International application number: PCT/EP2004/052649
(87) International publication number: WO 2005/039302

(56) References cited:
- DE-A1- 1 909 131
- DE-A1- 10 206 383
- DE-U- 1 928 032
- DE-U- 1 980 744
- US-A- 3 517 524
- US-A1- 2003 085 237

## Description

The present invention relates to a piston device for dispensing ice cream, for machines of the "instant" type for ice cream production.

DE 1 928 032 U discloses a device for dispensing ice cream.

As is known, a machine of the "instant" type for producing ice cream comprises a whisking cylinder closed at the front in a sealed way by a hatch provided with a dispensing valve formed by a cylinder in which a piston slides in a sealed way. This cylinder has a lateral aperture for communication with the whisking cylinder, and has at its base an ice cream dispensing aperture provided with a notching device, generally star- or flower-shaped, to produce ice cream with a grooved external profile.

The object of the present invention is to provide an ice cream dispensing device for ice cream machines of the aforementioned type which makes it possible, using the same machine, to produce ice cream having different profiles and shapes, so that the user can select a preferred shape as well as preferred flavours.

This object is achieved by the present invention by means of a closing hatch provided with a cylindrical chamber of relatively large diameter in which is mounted with a seal a rotatable drum carrying a plurality of cylindrical housings, each having in its lower lateral area a through hole which can be aligned with an aperture for communication with the whisking cylinder, each of the said cylinders being closed at its base by a die plate for the extrusion of the ice cream, provided with one or more through holes having various shapes, sizes and arrangements, pistons being fitted with a seal in each of these cylindrical housings and having on their bases projections complementary to the holes of the said die plates, and means also being provided for selectively engaging the said pistons to raise and lower them in such a way as to cause the ice cream to be dispensed through the selected die plate. Further objects, characteristics and advantages of the present invention will be made clear in the course of the following description, provided by way of example and without restrictive intent, with reference to the attached drawings, in which
- Fig. 1 shows a lateral elevation in partial section of a multiple ice cream dispensing hatch according to the present invention;
- Fig. 2 is an exploded perspective view of the device according to the invention;
- Fig. 3 is a plan view of the piston housing drum; and
- Fig. 4 is a view of the drum of Fig. 3 with the pistons fitted in the corresponding cylindrical housings.

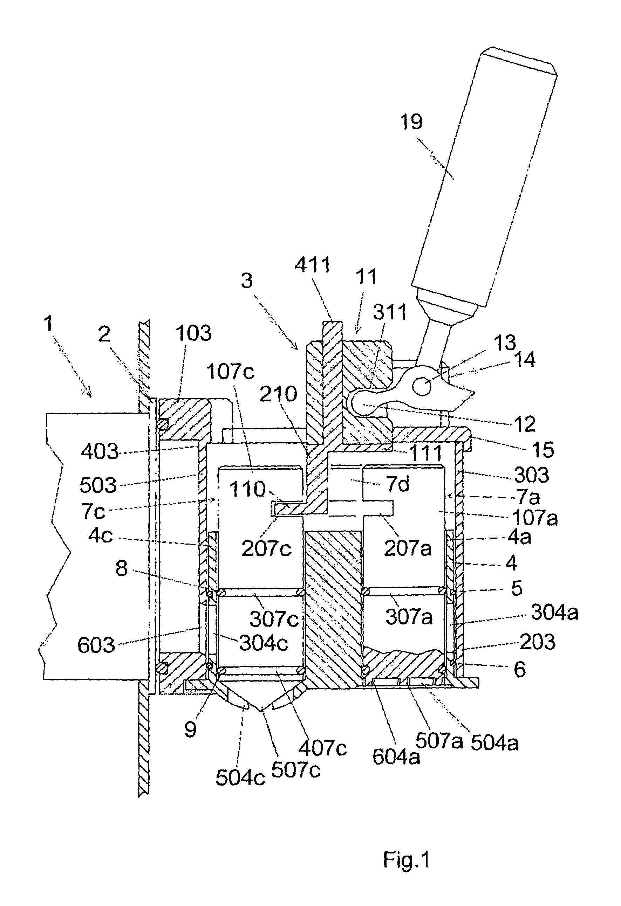

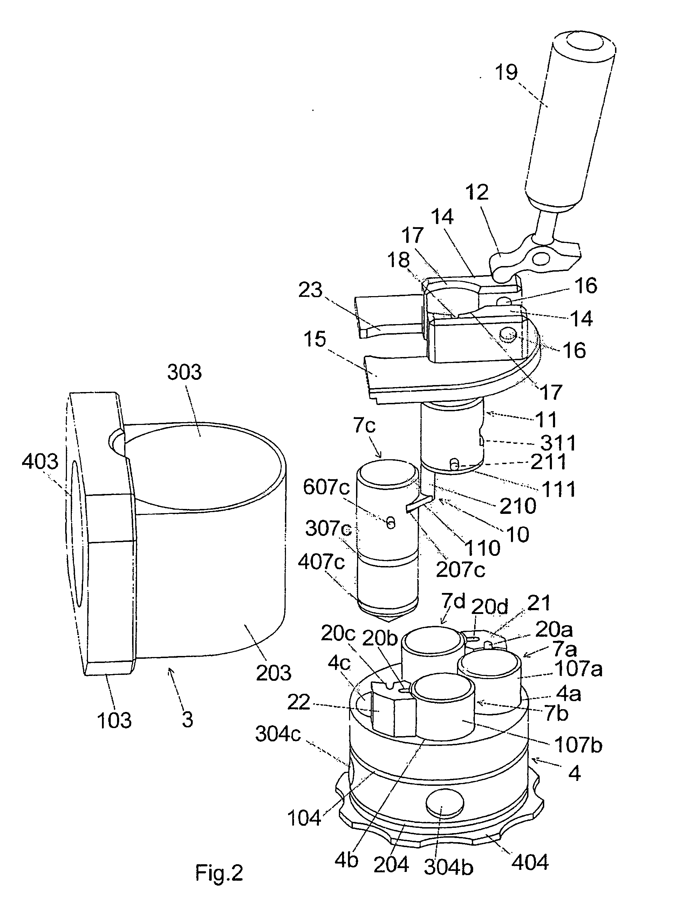

With reference to the drawings and with particular reference to Figs 1 and 2, the number 1 indicates a whisking cylinder of an ice cream machine of the "instant" type. On the front end of this cylinder there is mounted with a seal, by means of a flange 2, a hatch 3, comprising a base plate 103 and a body 203 having an internal cylindrical chamber 303. This base plate 103 is provided with a cylindrical recess 403, communicating with the whisking cylinder 1, the lower part of the end wall 503 of the recess 403 being provided with a through hole 603 for communication with the cylindrical chamber 303 of the body 203 of the hatch. A drum 4, comprising two outer annular grooves 104 and 204 for housing the annular seals 5 and 6, is mounted rotatably about its vertical axis in this cylindrical chamber 303. Between these annular grooves 104 and 204 there are formed, on the wall of the drum 4 at the height of the through hole 603, four through holes 304a, 304b, 304c and 304d, spaced at equal angular intervals, which open into four cylindrical housings 4a, 4b, 4c and 4d coaxial with, and extending from the upper surface of, the drum 4 and on its periphery, at equal distances from the periphery and from each other. Each of these holes 304a, 304b, 304c and 304d can be aligned, by rotation of the drum 4, with the through hole 603 for communication with the whisking cylinder 1. For this purpose, the drum 4 has in its lower part a handwheel 404 projecting laterally from the said drum 4 and enabling the drum to be rotated stepwise. A piston 7a, 7b, 7c and 7d is housed in each of these cylindrical housings 4a, 4b, 4c, and 4d. Each of these pistons 7a, 7b, 7c and 7d comprises an upper portion 107a, 107b, 107c and 107d projecting from the drum 4 and from the corresponding cylindrical housing 4a, 4b, 4c and 4d. In this portion there is formed a slot 207a, 207b, 207c and 207d, which is substantially horizontal and faces the centre of the drum 4. Below this projecting upper portion 107a, 107b, 107c and 107d, and inside the corresponding cylindrical housing 4a, 4b, 4c and 4d, each of these pistons 7a, 7b, 7c and 7d has two annular grooves 307a, 307b, 307c, 307d and 407a, 407b, 407c, 407d, in each of which a sealing ring, namely the ring 8 and the ring 9 respectively, is housed.

Each of these slots 207a, 207b, 207c and 207d formed in the projecting upper portions 107a, 107b, 107c and 107d of the pistons 7a, 7b, 7c and 7d can engage with its base 110 an L-shaped driving arm 10, whose shank 210 is connected to the plate 111 fixed to the base of a guide piston 11. This piston 11 is provided with a lateral anti-rotation pin 211. The guide piston 11 comprises a recess 311 and carries within it a vertical pin 411 projecting upwards and outwards, formed in one piece with the said lower plate 111. This recess 311 is engaged by a finger 12 fixed to the operating handle 19 of the piston 11, and engaged with the pin 13 secured in the holes 16 of the fins 14 which are fixed to the cover 15. A vertical groove 18, in which the anti-rotation pin 211 of the guide piston 11 can slide, is formed in the cylinder 17 housing the piston 11.

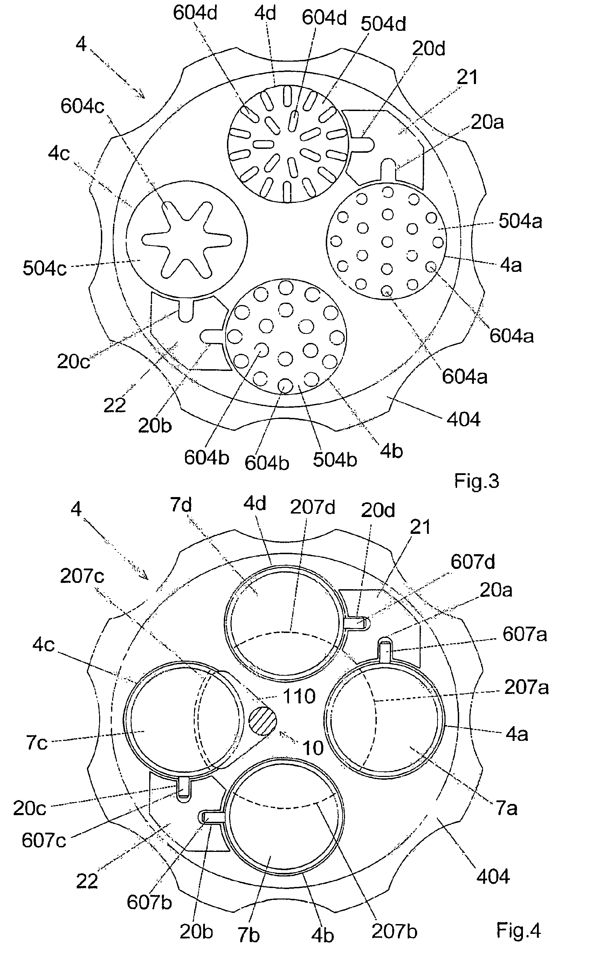

Fig. 3 shows a plan view of the drum 4 illustrated in the preceding figures. The cylindrical housings 4a, 4b, 4c and 4d have in their lower parts die plates 504a, 504b, 504c and 504d for dispensing the ice cream, having holes with various shapes, sizes and arrangements; in particular, the die plate 504a of the cylindrical housing 4a has a series of small through holes 604a equally spaced from each other, from which the ice cream emerges substantially in the form of "spaghetti"; the die plate 504b has a series of larger through holes 604b through which the ice cream emerges in the form of "sticks"; the die plate 504c has a single through hole 604c having the traditional star shape; and finally the die plate 504d has a series of through slits 604d from which the ice cream emerges in the form of "strips".

In the embodiment of the invention described above, the cylindrical housings 4a, 4b, 4c and 4d provided with corresponding die plates 504a, 504b, 504c and 504d for dispensing the ice cream are four in number, but clearly a greater or lesser number of these cylindrical housings with corresponding die plates could be provided as an alternative, these elements again being positioned on the periphery of the drum 4 and equally spaced from each other.

Fig. 4 shows a plan view of the drum 4 into whose cylindrical housings 4a, 4b, 4c and 4d corresponding pistons 7a, 7b, 7c and 7d have been fitted. Each of these pistons 7a, 7b, 7c and 7d comprises in its lower part a series of plugs 507a, 507b, 507c and 507d whose shape is exactly complementary to that of the holes formed in the corresponding die plate, in such a way that the holes are completely blocked when the piston is fully lowered into the position for expulsion of the ice cream and closing; consequently, in the example illustrated, the plug 507a consists of a series of lower small projecting cylinders (see the section in Fig. 1) for closing the small through holes 604a of the "spaghetti" die plate 504a; the plug 507b, not shown in the figures, consists of a series of lower small cylinders, whose diameters are greater than those of the plug 507a, for closing the through holes 604b of the "stick" die plate 504b. On the other hand, the piston 7c terminates in the usual way in a conical end for closing the star-shaped through hole 604c of the die plate 504c; and finally the plug 507d, not shown in the figures, consists in its lower part of a series of projecting elements whose shapes match the through slits 604d in the "strip" die plate 504d. The figure shows the slots 207a, 207b, 207c and 207d formed in each of the pistons 7a, 7b, 7c and 7d and facing the centre of the drum 4. As mentioned previously, the base 110 of the L-shaped driving arm 10 engages in these slots 207a, 207b, 207c and 207d. In particular, this figure shows the situation in which the said base 110 engages the slot 207c of the piston 7c. Each of the four pistons 7a, 7b, 7c and 7d comprises an anti-rotation pin 607a, 607b, 607c, 607d at the side of the corresponding slot 207a, 207b, 207c, 207d. Each of these anti-rotation pins 607a, 607b, 607c, 607d can slide in a corresponding vertical groove 20a, 20b, 20c, 20d formed in the opposite sides of two blocks 21 and 22.

The operation of the present ice cream dispensing device will be evident. It is assumed that the initial situation is as shown in Fig. 1, in which the piston 7c is in the lowered position, and the slot 207 of this piston is engaged by the base 110 of the L-shaped drive arm. To dispense the ice cream from the cylinder 4c, this piston 7c must be raised to make the aperture 304c communicate with the cylindrical housing 4c with the die plate 504c at its base: the piston 7c is raised in the usual way by grasping the handle 19 and rotating it downwards, so that the finger 12, engaged in the recess 311, rotates about the pin 13 and raises the guide piston 11 fixed to the said L-shaped drive arm 10. Since the base 110 of the arm 10 is engaged in the slot 207c of the piston 7c, the raising of the piston 11 causes the raising of the piston 7c up to a certain point at which the hole 304c is released and ice cream can emerge from the die plate 504c. When the desired quantity of ice cream has been obtained, the handle 19 is rotated in such a way as to lower the piston 7c again, making it slide with a seal in its cylindrical housing 4c until the plug 507c again closes the star-shaped through hole 604c of the die plate 504c.

To produce an ice cream having a different shape, the handwheel 404 is grasped and the drum 4 is rotated until the cylindrical housing with the die plate having the chosen shape of ice cream is positioned with its piston next to the base plate 103 of the hatch 3. The correct alignment of this cylindrical housing 4a with this base plate 103 of the hatch 3 can be checked through the aperture 23 formed in the upper cover 15, or can be checked by means for ensuring a stepwise rotation of the knob 404.

## Claims

1. Piston device for dispensing ice cream, for ice cream machines of the "instant" type, comprising a whisking cylinder (1) closed by a hatch (3) having an aperture (603) communicating with the said whisking cylinder (1), **characterized in that** the said hatch 3 has a cylindrical chamber (303) of relatively large diameter in which is mounted with a seal a rotatable drum (4) carrying a plurality of cylindrical housings (4a-4d), each having in its lower lateral area a through hole (304a-304d) which can be aligned with the said aperture (603) for communication with the whisking cylinder.

2. Dispensing device according to Claim 1, **characterized in that** a vertically slidable piston (7a-7d) is fitted into each of the said cylindrical housings (4a-4d), means being provided for the selective movement of the said pistons (7a-7d).

3. Dispensing device according to Claim 2, **characterized in that** each of the said cylindrical housings (4a-4d) is provided at its base with a die plate (504a-504d) provided with a series of through holes (604a-604d) for imparting any desired cross-sectional profile to the ice cream extruded through the die plates.

4. Device according to Claim 3, **characterized in that** the said ice cream extrusion pistons are provided at their bases with a series of projections or plugs (504a-504d) complementary to the holes (604a-604d) of the said die plates, in such a way that the ice cream remaining in the said holes is fully expelled at the end of the dispensing stage.

5. Device according to Claim 1, **characterized in that** the said cylindrical housings (4a-4d) carrying the die plates (504a-504d) are positioned at equal distances from each other and at the same distance from the periphery of the drum (4).

6. Dispensing device according to Claim 1, **characterized in that** the said drum (4) comprises in its lower part a handwheel (404) for rotating it in steps.

7. Dispensing device according to Claim 2, **characterized in that** each of the said pistons (7a-7d) is provided with a reference and anti-rotation pin (607a-607d) which can slide in a vertical groove (20a-20d) in the cylindrical housing (4a-4d) in which the corresponding piston (7a-7d) is fitted.

8. Device according to Claim 7, **characterized in that** each piston (7a-7d) is provided in its upper part (1 07a-1 07d) with a substantially horizontal slot (207a-207d) which can be engaged by an element (10) for raising and lowering the engaged piston.

9. Dispensing device according to Claim 8, **characterized in that** the said piston driving element (10) comprises a shank (210) connected to a guide piston (11) slidable in a cylindrical housing (17) formed on the surface of a cover (15) which closes the hatch (3).

10. Device according to Claim 9, in which a re-entrant (311), in which is engaged a finger (12) fixed to a manually operated handle (19), is formed on the lateral wall of the said guide piston (11).

11. Dispensing device according to Claim 10, **characterized in that** a reference and anti-rotation pin (211), which can slide in a vertical groove (18) in the cylindrical housing in which the said piston slides, is provided on the lateral wall of the said guide piston (11).

## Patentansprüche

1. Kolbenvorrichtung zur Ausgabe von Speiseeis für "Express"-Speiseeismaschinen, beinhaltend einen Rührzylinder (1), der durch eine Türklappe (3) verschlossen ist, die eine Öffnung (603) aufweist, die mit dem Rührzylinder (1) in Verbindung steht, **dadurch gekennzeichnet, dass** die Türklappe (3) eine zylindrische Kammer (303) mit relativ großem Durchmesser aufweist, in der mit entsprechender Abdichtung eine drehbare Trommel (4) montiert ist, die mehrere zylindrische Aufnahmen (4a-4d) trägt, die jeweils an ihrem unteren seitlichen Bereich eine Durchgangsöffnung (304a-304d) aufweisen, die übereinstimmend mit der genannten Öffnung (603) ausgerichtet werden kann, um die Verbindung mit dem Rührzylinder herzustellen.

2. Ausgabevorrichtung nach Anspruch 1, **dadurch gekennzeichnet, dass** ein vertikal gleitbarer Kolben (7a-7d) in jeder der zylindrischen Aufnahmen (4a-4d) eingebaut ist, wobei Mittel für die selektive Betätigung der Kolben (7a-7d) vorgesehen sind.

3. Ausgabevorrichtung nach Anspruch 2, **dadurch gekennzeichnet, dass** jede der zylindrischen Aufnahmen (4a-4d) an ihrem Boden mit einer Lochscheibe (504a-504d) versehen ist, die eine Reihe von Durchgangslöchern (604a-604d) aufweist, um der durch die Lochscheiben ausgepressten Eiscreme ein gewünschtes Querschnittprofil zu verleihen.

4. Vorrichtung nach Anspruch 3, **dadurch gekennzeichnet, dass** die Eiscreme-Auspresskolben an ihren Böden mit mehreren Vorsprüngen oder Stiften (504a-504d) versehen sind, die komplementär zu den Löchern (604a-604d) der genannten Scheiben geformt sind, so dass die in den Löchern verbleibende Eiscreme am Ende des Ausgabevorganges vollständig herausgedrückt wird.

5. Vorrichtung nach Anspruch 1, **dadurch gekennzeichnet, dass** die zylindrischen Aufnahmen (4a-4d), welche die Lochscheiben (504a-504d) tragen, in gleichem Abstand zueinander und jeweils im gleichen Abstand vom Außenumfang der Trommel (4) angeordnet sind.

6. Ausgabevorrichtung nach Anspruch 1, **dadurch gekennzeichnet, dass** die Trommel (4) an ihrem unteren Teilabschnitt ein Handrad (404) zum schrittweisen Drehen beinhaltet.

7. Ausgabevorrichtung nach Anspruch 2, **dadurch gekennzeichnet, dass** jeder der genannten Kolben (7a-7d) mit einem Bezugs- und Verdrehschutzzapfen (607a-607d) ausgestattet ist, der in einer vertikalen Rille (20a-20d) in der zylindrischen Aufnahme (4a-4d), in der der entsprechende Kolben (7a-7d) eingebaut ist, gleiten kann.

8. Vorrichtung nach Anspruch 7, **dadurch gekennzeichnet, dass** jeder Kolben (7a-7d) an seinem oberen Teilabschnitt (107a-107d) mit einem im Wesentlichen horizontalen Schlitz (207a-207d) versehen ist, in den ein Element (10) eingreifen kann, das zum Anheben und Senken des eingekuppelten Kolbens dient.

9. Ausgabevorrichtung nach Anspruch 8, **dadurch gekennzeichnet, dass** das Kolbenbetätigungselement (10) einen Schaft (210) beinhaltet, der mit einem Führungskolben (11) verbunden ist, der in einer zylindrischen Aufnahme (17) gleiten kann, die auf der Oberfläche eines Deckels (15) zum Verschluss der Türklappe (3) ausgebildet ist.

10. Vorrichtung nach Anspruch 9, in der eine Aussparung (311), in die ein an einem handbetätigten Griff (19) befestigter Finger (12) eingreift, auf der Seitenwand des Führungskolbens (11) ausgebildet ist.

11. Ausgabevorrichtung nach Anspruch 10, **dadurch gekennzeichnet, dass** ein Bezugs- und Verdrehschutzzapfen (211), der in einer vertikalen Rille (18) in der zylindrischen Aufnahme gleiten kann, in welcher der Kolben gleitbar untergebracht ist, auf der Seitenwand des Führungskolbens (11) bereitgestellt ist.

## Revendications

1. Un dispositif à pistons distributeur de crème glacée, pour machines à crèmes glacées de type « instantané », comprenant un cylindre de fouettage (1) fermé par une trappe (3) ayant une ouverture (603) qui communique avec ledit cylindre de fouettage (1), **caractérisé en ce que** ladite trappe (3) a une chambre cylindrique (303) de diamètre relativement grand dans laquelle est monté avec un joint d'étanchéité un tambour rotatif (4) supportant une pluralité de logements cylindriques (4a-4d) présentant chacun, dans sa zone latérale inférieure, un trou débouchant (304a-304d) qui peut être aligné avec ladite ouverture (603) de communication avec le cylindre de fouettage.

2. Le dispositif distributeur selon la revendication 1, **caractérisé en ce qu'**un piston (7a-7d) verticalement coulissant est monté dans chacun desdits logements cylindriques (4a-4d), des moyens étant prévus pour le mouvement sélectif desdits pistons (7a-7d).

3. Le dispositif distributeur selon la revendication 2, **caractérisé en ce que** chacun desdits logements cylindriques (4a-4d) est doté, au niveau de sa base, d'une filière (504a-504d) dotée d'une série de trous débouchants (604a-604d) destinés à donner à la crème glacée extrudée à travers les filières tout profil voulu en coupe transversale.

4. Le dispositif selon la revendication 3, **caractérisé en ce que** lesdits pistons d'extrusion de la crème glacée sont dotés, au niveau de leur base respective, d'une série de saillies ou broches (504a-504d) complémentaires aux trous (604a-604d) desdites filières, de manière à ce que la crème glacée restant dans lesdits trous soit complètement expulsée à la fin de la phase de distribution.

5. Le dispositif selon la revendication 1, **caractérisé en ce que** lesdits logements cylindriques (4a-4d) supportant les filières (504a-504d) sont positionnés à égale distance les uns des autres et à la même distance par rapport à la périphérie du tambour (4).

6. Le dispositif distributeur selon la revendication 1, **caractérisé en ce que** ledit tambour (4) comprend, dans sa partie inférieure, un volant (404) destiné à en permettre la rotation par pas.

7. Le dispositif distributeur selon la revendication 2, **caractérisé en ce que** chacun desdits pistons (7a-7d) est doté d'une goupille de référence et d'anti-rotation (607a-607d) qui peut coulisser dans une rainure verticale (20a-20d) du logement cylindrique (4a-4d) dans lequel est monté le piston (7a-7d) correspondant.

8. Le dispositif selon la revendication 7, **caractérisé en ce que** chaque piston (7a-7d) est doté, dans sa partie supérieure (107a-107d), d'une fente (207a-207d) essentiellement horizontale, qui peut être occupée par un élément (10) de soulèvement et abaissement du piston assujetti.

9. Le dispositif distributeur selon la revendication 8, **caractérisé en ce que** ledit élément (10) d'entraînement du piston comprend une tige (210) reliée à un piston de guidage (11) pouvant coulisser dans un logement cylindrique (17) formé sur la surface d'un couvercle (15) qui ferme la trappe (3).

10. Le dispositif selon la revendication 9, dans lequel un renfoncement (311), dans lequel vient en prise un doigt (12) fixé à une poignée (19) à actionnement manuel, est formé sur la paroi latérale dudit piston de guidage (11).

11. Le dispositif distributeur selon la revendication 10, **caractérisé en ce qu'**une goupille de référence et d'anti-rotation (211), qui peut coulisser dans une rainure verticale (18) du logement cylindrique dans lequel coulisse ledit piston, est prévue sur la paroi latérale dudit piston de guidage (11).
